# FASCICULE DE BREVET EUROPEEN

(11) **EP 3 577 092 B1**
(45) Date de publication et mention de la délivrance du brevet: **31.03.2021**
(21) Numéro de dépôt: 18713301.2
(22) Date de dépôt: 01.02.2018
(51) Int. Cl.: C04B 35/573, C04B 35/628, C04B 35/80, B29B 11/16, B29C 70/48, B29K 101/12, B29K 101/10, C04B 35/117, C04B 35/14, C04B 35/185, C04B 35/565, C04B 35/571, C04B 35/634, C04B 35/636, C04B 35/76, C04B 35/82, C04B 35/83, B29C 70/38, C04B 35/563

(54) **PROCÉDÉ DE FABRICATION D'UNE PIÈCE EN MATÉRIAU COMPOSITE**
VERFAHREN ZUR HERSTELLUNG EINES TEILS AUS EINEM VERBUNDWERKSTOFF
METHOD FOR THE PRODUCTION OF A PART MADE FROM A COMPOSITE MATERIAL

(30) Priorité: 02.02.2017 FR 1750866
(43) Date de publication de la demande: 11.12.2019
(73) Titulaire: Safran Ceramics, 33185 Le Haillan (FR)
(72) Inventeur: SCHWARTZ, Mathieu, 77550 Moissy-Crayamel (FR); DELEHOUZE, Arnaud, 77550 Moissy-Crayamel (FR); LAVAL, Nicolas, 77550 Moissy-Crayamel (FR); DESJOYEAUX, Bertrand, 77550 Moissy-Crayamel (FR)
(74) Mandataire: Cabinet Beau de Loménie
(86) Numéro de dépôt international: PCT/FR2018/050244
(87) Numéro de publication internationale: WO 2018/142080

(56) Documents cités:
- EP-A1- 1 472 060
- FR-A1- 3 033 729
- US-A- 5 188 782
- US-A- 5 439 627
- US-A1- 2013 149 491

## Description

### Arrière-plan de l'invention

L'invention concerne un procédé de fabrication d'une pièce en matériau composite mettant en œuvre une technique de placement automatique de fibres (« Automated Fiber Placement » ; « AFP »).

Il est connu de réaliser des pièces en matériau composite par drapage en forme de strates de renfort fibreux pré-imprégnées. Dans certaines techniques actuelles, le drapage est effectué manuellement par un opérateur. Ces techniques peuvent engendrer des coûts de production de pièces relativement élevés et des risques d'erreur de positionnement des strates. Cela conduit à une certaine variabilité dans les performances mécaniques des pièces obtenues et à des pièces dont les propriétés mécaniques peuvent être améliorées.

D'autres solutions ont été développées comme la technique de placement automatique de fibres. Cette technique mécanisée présente un intérêt pour réduire le coût de production des pièces en matériau composite. Dans l'art antérieur, des strates fibreuses imprégnées d'une suspension aqueuse comprenant des particules céramiques sont drapées sur une surface afin d'obtenir une préforme de la pièce à obtenir. La préforme ainsi obtenue est ensuite séchée puis les particules céramiques sont frittées afin de former la matrice dans la porosité de la préforme. Les performances mécaniques des pièces obtenues par les techniques de placement automatique de fibres de l'art antérieur peuvent toutefois être améliorées, notamment du fait de la présence de porosités résiduelles au sein de la matrice.

On connait en outre US 5 188 782 qui divulgue la production de préformes à partir de fibres céramiques ou métalliques, FR 3 033 729 qui divulgue une tête d'application de fibres avec système de chauffage infrarouge, EP 1 472 060 qui divulgue un ruban carbone avec un liant fugitif et un procédé d'utilisation associé, US 5 439 627 qui divulgue un procédé pour la fabrication de composites renforcés et US 2013/0149491 qui divulgue un article composite fabriqué à partir d'un ruban fibreux.

Il existe donc un besoin pour un procédé permettant d'obtenir, avec un coût de production réduit, des pièces en matériau composite à propriétés mécaniques améliorées.

### Objet et résumé de l'invention

A cet effet, l'invention propose, selon un premier aspect, un procédé de fabrication d'une pièce en matériau composite comprenant les étapes suivantes :
- formation d'une préforme fibreuse de la pièce à obtenir par dépôt sur une surface d'une pluralité de structures fibreuses imprégnées par un polymère thermoplastique, le dépôt étant effectué par placement automatique de fibres,
- élimination du polymère thermoplastique présent dans la préforme par dissolution par un solvant, et
- injection d'une composition d'imprégnation liquide dans la porosité de la préforme fibreuse après élimination du polymère thermoplastique afin de former une matrice dans la porosité de la préforme fibreuse.

Pour des raisons de concision, la technique de placement automatique de fibres sera dans la suite désignée par « technique AFP ».

Le polymère thermoplastique enrobant tout ou partie des fibres des structures fibreuses leur confère une cohésion et un pouvoir d'adhésion suffisants compatibles de la réalisation d'une préforme fibreuse par technique AFP. Le polymère thermoplastique est utilisé, dans l'invention, en tant que liant fugitif utile pour constituer la préforme mais qui est ensuite éliminé sans laisser de résidu nuisible avant formation de la matrice. Cette élimination permet de libérer la porosité de la préforme pour pouvoir introduire par injection le ou les matériaux destinés à former la matrice dans la porosité inter- et intra-fibres. Le procédé selon l'invention diffère des techniques AFP de l'art antérieur en ce que le ou les constituants destinés à former la matrice ne sont pas apportés en même temps que les fibres lors de la formation de la préforme mais sont, au contraire, apportés par injection d'une composition d'imprégnation après les étapes de formation de la préforme et d'élimination du polymère thermoplastique. L'apport de la matrice par cette technique d'injection permet avantageusement d'améliorer la qualité de la matrice formée, en réduisant considérablement le volume des macroporosités par comparaison avec les techniques AFP de l'art antérieur, pour lesquelles la formation de macroporosités est inhérente à la technique de drapage de couches pré-imprégnées des constituants de la matrice. L'invention permet ainsi de fabriquer, avec un coût de production réduit, des pièces en matériau composite à propriétés mécaniques améliorées, ce qui permet notamment d'obtenir un allégement des éléments formés à partir de telles pièces tout en conservant les performances mécaniques souhaitées.

Dans un exemple de réalisation, le polymère thermoplastique a une température de transition vitreuse supérieure ou égale à 50°C.

Une telle caractéristique participe à améliorer la stabilité dans le temps des fibres imprégnées par le polymère thermoplastique et à limiter le pouvoir collant des fibres à température ambiante (20°C), facilitant ainsi leur stockage avant dépôt par la technique AFP et leur acheminement jusqu'à l'élément d'application de la pression de la tête de dépose AFP.

Dans un exemple de réalisation, le polymère thermoplastique a une température de fusion supérieure ou égale à 50°C, par exemple comprise entre 50°C et 250°C, voire comprise entre 150°C et 200°C.

Une telle caractéristique participe à limiter le pouvoir collant des fibres à température ambiante, facilitant ainsi leur stockage avant dépôt par la technique AFP et leur acheminement au sein de la tête de dépose. Le pouvoir d'adhésion souhaité peut alors être obtenu par chauffage durant le dépôt par technique AFP afin de ramollir, voire faire fondre, le polymère thermoplastique.

Dans un exemple de réalisation, le polymère thermoplastique est choisi parmi : les carbonates de polyalkylene, les polyesters, le poly(méthacrylate de méthyle) (PMMA), l'alcool polyvinylique (PVA), le polyvinylpyrrolidone (PVP), les polyethylènes glycol (PEG), les maltodextrines, les polymères cellulosiques, les cires et leurs mélanges.

Dans un exemple de réalisation, le polymère thermoplastique est hydrosoluble. Dans ce cas, le solvant est aqueux. En particulier, le polymère thermoplastique hydrosoluble est choisi parmi : l'alcool polyvinylique (PVA), le polyvinylpyrrolidone (PVP), les polyethylènes glycol (PEG) et leurs mélanges. Le solvant peut être de l'eau, par exemple à une température supérieure ou égale à 60°C, voire comprise entre 60°C et 90°C. Quelle que soit sa nature chimique, le solvant peut être liquide.

Dans un exemple de réalisation, les structures fibreuses sont formées de fibres céramiques, oxyde ou non-oxyde, de fibres de verre, de fibres métalliques, de fibres polymériques, comme des fibres d'aramide (Kevlar®), de fibres de bore ou de fibres carbone, ou d'un mélange de telles fibres.

Dans un exemple de réalisation, la matrice est obtenue après chauffage de la composition d'imprégnation injectée dans la porosité de la préforme fibreuse.

Dans ce cas, la composition d'imprégnation peut comprendre une suspension d'une pluralité de particules céramiques et la matrice peut être formée par frittage de ces particules.

En variante, la composition d'imprégnation peut comprendre une résine et la matrice peut être formée par réticulation ou par réticulation puis pyrolyse de cette résine.

Dans un exemple de réalisation, la matrice est formée par injection d'une composition de métal fondu dans la porosité de la préforme.

La matrice peut au moins partiellement, voire entièrement, être en matériau céramique. En variante, la matrice peut comporter au moins une phase de carbone et au moins une phase d'un matériau céramique. Le matériau céramique formant tout ou partie de la matrice peut être un matériau oxyde, comme l'alumine, ou un matériau non-oxyde, comme le carbure de silicium. Dans le cas où la matrice comprend un matériau céramique oxyde, les structures fibreuses peuvent être formées de fibres céramiques oxydes, comme des fibres d'alumine ou d'aluminosilicate ou d'un mélange de telles fibres. Dans le cas où la matrice comprend un matériau céramique non-oxyde, les structures fibreuses peuvent être formées de fibres de carbone ou de fibres céramiques non-oxyde, ou d'un mélange de telles fibres.

L'invention concerne aussi des cas où la matrice est entièrement en carbone. De tels types de matrice peuvent être obtenus par injection d'une résine précurseur de carbone, telle qu'une résine phénolique ou furanique, puis pyrolyse de cette résine.

En variante encore, la matrice obtenue peut être une matrice organique. Une matrice organique peut être formée par injection d'une résine et réticulation de cette résine. Dans le cas où la matrice est organique, les structures fibreuses peuvent être formées de fibres de carbone, de fibres de verre, de fibres polymériques, de fibres de bore ou de fibres métalliques, ou d'un mélange de telles fibres.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre de manière schématique et partielle la formation d'une préforme fibreuse par placement automatique de fibres dans le cadre d'un exemple de procédé selon l'invention, et
- la figure 2 est un ordinogramme illustrant une succession d'étapes qui peuvent être mises en œuvre dans le cadre d'un procédé selon l'invention.

### Description détaillée de modes de réalisation

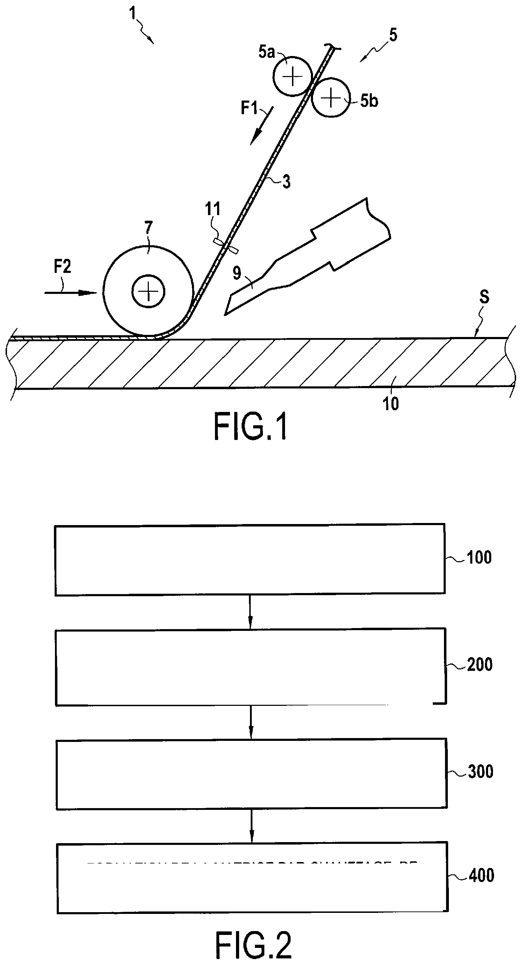

La figure 1 illustre de manière schématique et partielle la réalisation d'une préforme fibreuse par placement automatique de fibres dans le cadre d'un exemple procédé selon l'invention. La préforme fibreuse ainsi obtenue est destinée à constituer le renfort fibreux de la pièce à obtenir.

La figure 1 illustre schématiquement la structure d'une tête de dépose 1 d'un dispositif de mise en œuvre d'une technique AFP. La structure de la tête de dépose 1 illustrée est connue en soi. La tête de dépose 1 est alimentée par une bande fibreuse 3 imprégnée par le polymère thermoplastique afin de réaliser la préforme fibreuse.

L'imprégnation préalable de la bande fibreuse par le polymère thermoplastique peut être réalisée par toute technique conventionnelle, par exemple par trempage, par application au rouleau du polymère ou encore par pulvérisation de ce dernier. La bande peut être imprégnée par le polymère thermoplastique avant mise en œuvre de la technique AFP et être alors stockée jusqu'à mise en œuvre de ce procédé. En variante, la bande est imprégnée en ligne avec la tête de dépose 1 en amont de cette dernière puis directement acheminée à la tête de dépose 1 pour formation de la préforme par technique AFP.

Le polymère thermoplastique imprégnant la bande fibreuse 3 peut être hydrosoluble, comme mentionné plus haut. Ce caractère hydrosoluble permet au polymère d'être dissous par mise en contact avec un milieu aqueux de température supérieure ou égale à 20°C, voire à 50°C. Le polymère thermoplastique peut toutefois ne pas être hydrosoluble, auquel cas un solvant organique est utilisé pour réaliser l'étape d'élimination après formation de la préforme fibreuse.

Comme mentionné plus haut, le polymère thermoplastique peut présenter une température de transition vitreuse supérieure ou égale à 50°C, par exemple comprise entre 50°C et 120°C, par exemple entre 60°C et 80°C, voire entre 60°C et 70°C. La température de transition vitreuse peut être déterminée par calorimétrie différentielle à balayage (« Differential Scanning Calorimetry » ; « DSC »).

La température de fusion du polymère thermoplastique peut, quant à elle, être comprise entre 50°C et 250°C, voire entre 150°C et 200°C. La température de fusion peut être mesurée par DSC.

La préforme fibreuse est formée sur la surface S d'un support 10. La tête de dépose 1 est, pour cela, alimentée par la bande fibreuse 3 imprégnée par le polymère thermoplastique. La bande imprégnée 3 est acheminée par un élément de convoyage 5 jusqu'à un élément d'application de la pression 7 situé du côté de la surface S. L'élément de convoyage 5 est ici sous la forme d'un couple de rouleaux contra-rotatifs 5a et 5b entre lesquels la bande 3 est présente. L'élément de convoyage 5 permet de faire avancer la bande imprégnée 3 jusqu'à l'élément d'application de la pression 7 selon la direction matérialisée par la flèche F1.

L'élément d'application de la pression 7 applique une pression sur la bande imprégnée 3 afin de réaliser son dépôt sur la surface S. L'élément d'application de la pression 7 est ici sous la forme d'un rouleau. La tête de dépose 1 peut, en outre, comporter un élément chauffant 9 situé au voisinage de l'élément d'application de la pression 7. Cet élément chauffant 9 permet, en cas de besoin, de chauffer la bande imprégnée 3 lors de son dépôt afin de fluidifier le polymère thermoplastique et ainsi conférer le pouvoir d'adhésion souhaité à la bande déposée. L'élément chauffant 9 peut par exemple imposer à la bande imprégnée 3 présente sur l'élément d'application de la pression 7 une température supérieure ou égale à 50°C. Le polymère thermoplastique peut, lors du dépôt, être à l'état ramolli, c'est-à-dire ce polymère peut avoir subi un chauffage à une température supérieure à son point de ramollissement. Le polymère thermoplastique peut ainsi, lors du dépôt, être à l'état fondu ou pâteux.

Lors du dépôt, la tête de dépose 1 est mobile afin d'appliquer la bande imprégnée 3 sur une première zone déterminée de la surface S (flèche F2). Une fois l'application réalisée sur la première zone, l'élément de découpe 11 de la tête de dépose 1 coupe la bande imprégnée 3. Après cette découpe, on obtient ainsi le dépôt d'une première structure fibreuse imprégnée, formée par un premier tronçon de la bande 3, sur la première zone de la surface S. Initialement, avant dépôt de la première structure fibreuse, une couche initiale d'un matériau thermoplastique peut être déposée sur la première zone de la surface S et la première structure fibreuse peut ensuite être déposée sur cette couche de matériau thermoplastique. Le dépôt de cette couche initiale thermoplastique est optionnel.

La formation de la préforme est ensuite poursuivie par avancée de la bande imprégnée 3 dans la tête de dépose 1 jusqu'à l'élément d'application de la pression 7 par actionnement de l'élément de convoyage 5. La tête de dépose 1 peut être déplacée afin de réaliser le dépôt de la bande 3 sur une deuxième zone de la surface S distincte de la première zone. Le dépôt d'une deuxième structure fibreuse imprégnée, formée par un deuxième tronçon de la bande 3, sur la deuxième zone de la surface S est alors obtenu d'une manière similaire à celle décrite plus haut.

La réalisation de la préforme est ensuite poursuivie par dépôt d'une ou plusieurs autres structures fibreuses imprégnées de la même manière que décrite plus haut.

Comme évoqué plus haut, divers matériaux peuvent être envisagés pour constituer les fibres des structures fibreuses. En particulier, les structures fibreuses peuvent être formées de fibres céramiques ou en carbone. Les fibres céramiques peuvent être des fibres en matériau non-oxyde, comme le carbure de silicium SiC, ou en matériau oxyde comme l'alumine. Dans un exemple de réalisation, les fibres utilisées peuvent être des fibres SiC fournies sous la dénomination « Nicalon », « Hi-Nicalon » ou « Hi-Nicalon-S » par la société japonaise Nippon Carbon ou « Tyranno SA3 » par la société UBE. On peut encore utiliser des fibres d'alumine fournies sous la dénomination « Nextel » par la société 3M. Les fibres fournies sous la dénomination Torayca T300 par la société Toray constituent, quant à elles, un exemple de fibres de carbone utilisables.

Les structures fibreuses déposées peuvent être sous la forme de mèches fibreuses ou de strates de tissu. Les structures fibreuses déposées peuvent en particulier être dépourvues de composition pulvérulente. Le polymère thermoplastique imprégnant ces structures peut en particulier ne pas comporter de charges solides. Les structures fibreuses déposées peuvent être imprégnées uniquement par une phase organique comprenant le polymère thermoplastique. Les structures fibreuses peuvent ainsi ne pas être imprégnées par une phase aqueuse liquide lors de leur dépôt par technique AFP. En plus du polymère thermoplastique, les structures fibreuses déposées peuvent comporter un plastifiant.

Dans un exemple de réalisation, les structures fibreuses présentent chacune, lors de leur dépôt, une teneur massique en polymère thermoplastique supérieure ou égale à 1%, par exemple supérieure ou égale à 3%, voire à 5%. Cette teneur massique peut par exemple être comprise entre 1% et 12%, par exemple entre 3% et 12%, par exemple entre 3% et 8%, par exemple entre 5% et 8%. Les structures fibreuses peuvent chacune, lors de leur dépôt, être imprégnées partiellement par le polymère thermoplastique. En d'autres termes dans ce cas, la porosité des structures fibreuses est incomplètement remplie par le polymère thermoplastique.

Le polymère thermoplastique peut être choisi parmi : les carbonates de polyalkylene, comme le carbonate de polypropylène ou le carbonate de polyéthylène, les polyesters, comme les copolyesters aliphatiques tels que le polybutylène succinate ou les copolyesters semi-aromatiques comme le polytéréphtalate d'éthylène ou le polytéréphtalate de butylène, le poly(méthacrylate de méthyle), l'alcool polyvinylique, le polyvinylpyrrolidone, les polyethylènes glycol, les maltodextrines, les polymères cellulosiques, les cires et leurs mélanges. En particulier, le polymère thermoplastique peut être choisi parmi : l'alcool polyvinylique, le polyvinylpyrrolidone, les polyethylènes glycols et leurs mélanges.

Il est par ailleurs à noter que, selon les propriétés souhaitées pour la pièce à obtenir, les fibres de la bande fibreuse 3 peuvent, avant leur imprégnation par le polymère thermoplastique, avoir été revêtues par un revêtement en matériau céramique ou carbone.

Ainsi, ces fibres peuvent être revêtues par une interphase. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone). L'épaisseur de l'interphase peut par exemple être comprise entre 10 nm et 1000 nm, et par exemple entre 10 nm et 100 nm. L'interphase a ici une fonction de défragilisation dans la pièce obtenue qui favorise la déviation de fissures éventuelles parvenant à l'interphase après s'être propagées dans la matrice, empêchant ou retardant la rupture de fibres par de telles fissures. L'interphase peut éventuellement être revêtue par une couche supplémentaire de carbure de silicium qui permet notamment d'améliorer la résistance à l'oxydation de la pièce obtenue et de protéger l'interphase lors de la formation de la matrice. Les techniques permettant de former l'interphase et la couche SiC sont connues en soi et ne nécessitent pas d'être détaillées davantage ici. Il est par exemple possible d'utiliser une technique de dépôt/d'infiltration chimique en phase vapeur (« Chemical Vapor Deposition/Infiltration » ; « CVI »/« CVD ») pour réaliser de tels revêtements.

La préforme obtenue après mise en œuvre de la technique AFP peut comporter une unique couche fibreuse ou en variante une pluralité de couches fibreuses empilées.

La formation de la préforme peut, par exemple, comporter le dépôt d'une première couche fibreuse comprenant un premier ensemble de structures fibreuses imprégnées. Ces structures fibreuses du premier ensemble peuvent ou non être en contact bord à bord. La formation de la préforme peut, en outre, comporter le dépôt d'une deuxième couche fibreuse sur la première couche, cette deuxième couche comprenant un deuxième ensemble de structures fibreuses imprégnées. Ces structures fibreuses du deuxième ensemble peuvent ou non être en contact bord à bord. Le fait de ne pas déposer les structures fibreuses bord à bord peut avantageusement permettre de ménager des canaux supplémentaires pour l'injection dans la préforme afin de faciliter cette étape, notamment dans les zones de géométrie singulière. Les fibres du premier ensemble peuvent s'étendre selon une même première direction (i.e. parallèlement les unes par rapport aux autres). De manière similaire, les fibres du deuxième ensemble peuvent s'étendre selon une même deuxième direction. La deuxième direction peut être parallèle à la première direction. En variante, la deuxième direction forme un angle non nul avec la première direction. L'angle formé entre les première et deuxième directions est fonction des propriétés mécaniques souhaitées pour la pièce à obtenir. Dans le cas particulier où la préforme comprend une unique couche fibreuse, cette dernière peut être formée par un ensemble de structures fibreuses imprégnées en contact bord à bord ou non en contact bord à bord.

La surface S sur laquelle sont déposées les structures fibreuses imprégnées peut être plane. En variante, la surface S peut être non-plane et être convexe ou concave. La surface S peut par exemple avoir une forme développable, comme une forme conique, tronconique ou cylindrique, ou une forme non développable. Durant le dépôt des structures imprégnées par technique AFP, la surface S peut être fixe ou en variante être mobile. Dans ce dernier cas, la surface S peut par exemple être animée d'un mouvement de rotation durant le dépôt.

La figure 2 est un ordinogramme montrant les différentes étapes d'un exemple de procédé selon l'invention.

Une préforme fibreuse destinée à former le renfort fibreux de la pièce à obtenir est tout d'abord formée par technique AFP par drapage d'une pluralité de structures fibreuses imprégnées sur une surface comme décrit plus haut (étape 100).

Une fois la préforme obtenue sur le support, on peut positionner une paroi ou une contre-forme sur le support portant la préforme. Le support et la paroi ainsi positionnée définissent une chambre de traitement dans laquelle la préforme est présente. Un ou plusieurs ports d'injection et au moins un orifice de sortie peuvent être ménagés sur la paroi et déboucher dans la chambre de traitement.

On procède ensuite à l'élimination du polymère thermoplastique par injection d'un solvant dans le ou les ports d'injection et évacuation de ce solvant via l'orifice de sortie (étape 200). Le polymère thermoplastique est éliminé suite à la mise en contact avec ce solvant. Le solvant peut être liquide ou en variante le solvant peut être gazeux. Le solvant est choisi en fonction de la nature chimique du polymère thermoplastique afin de dissoudre ce dernier. On peut par exemple utiliser de l'eau à une température supérieure ou égale à 50°C pour éliminer l'alcool polyvinylique ou le polyvinylpyrrolidone. En variante, on peut utiliser un solvant organique, comme l'acétate d'éthyle qui permet notamment d'éliminer des polymères non hydrosolubles comme le carbonate de polypropylène. A l'issue de la mise en contact avec le solvant, le polymère thermoplastique peut être entièrement éliminé de la préforme fibreuse.

Une fois cette élimination réalisée, on peut éventuellement procéder à un séchage de la préforme fibreuse puis à l'injection de la composition d'imprégnation dans la porosité de la préfome fibreuse présente dans la chambre de traitement (étape 300). Ce séchage est toutefois optionnel, en particulier lorsque la composition d'imprégnation est sous la forme d'une suspension, on peut directement injecter cette suspension sans avoir au préalable séché la préforme fibreuse. Bien entendu, les matériaux constituant le support et la paroi sont choisis de sorte à être compatibles avec les conditions opératoires mises en œuvre durant la formation de la matrice.

La composition d'imprégnation peut être injectée avec une pression d'injection supérieure ou égale à 1 bar. La pression au niveau de l'orifice de sortie peut ou non être inférieure à 1 bar. On peut par exemple imposer une pression comprise entre 30 mbars et 50 mbars au niveau de l'orifice de sortie et il est possible, dans ce cas, d'injecter la composition d'imprégnation sans pression appliquée (i.e. à une pression d'injection égale à 1 bar). La composition d'imprégnation peut en variante être injectée sous pression, par exemple à une pression comprise entre 3 bars et 10 bars.

L'ordinogramme de la figure 2 concerne un cas où la matrice est obtenue par injection de la composition d'imprégnation dans la préforme puis par chauffage de cette composition d'imprégnation (étape 400). Comme il sera évoqué plus bas, la réalisation d'un chauffage subséquent après injection est optionnelle.

La composition d'imprégnation peut, selon un premier exemple, être sous la forme d'une suspension de particules céramiques dans un milieu liquide. Le milieu liquide peut être aqueux ou organique. Les particules céramiques peuvent par exemple être des particules de carbure de silicium, de carbure de bore, de mullite, de silice ou d'alumine. La suspension est injectée dans la porosité de la préforme fibreuse et un chauffage est ensuite effectué. Ce chauffage comprend une première phase de séchage durant laquelle le milieu liquide de la suspension est évaporé puis une deuxième phase durant laquelle la matrice céramique est formée par frittage des particules céramiques.

La composition d'imprégnation peut, selon un deuxième exemple, être sous la forme d'une résine. Après injection de cette résine, un chauffage est réalisé afin de réticuler la résine et obtenir une matrice organique. Cette résine peut ou non être chargée de particules. Ces particules peuvent être des particules céramiques ou de carbone, comme des particules de silice ou des nanotubes de carbone. Ces particules peuvent avoir une taille moyenne (D50) inférieure ou égale à 5µm, de préférence à 1µm.

La composition d'imprégnation peut, selon un troisième exemple, être sous la forme d'une résine précurseur de céramique ou de carbone. La résine précurseur de carbone peut par exemple être une résine phénolique ou une résine furanique. La résine précurseur de céramique peut par exemple être une résine polysiloxane, polysilazane ou polycarbosilane. Dans ce cas, après injection de la résine, on réalise un chauffage de celle-ci afin de réticuler puis pyrolyser cette résine et obtenir une phase de matrice céramique ou carbone. En raison du retrait rencontré lors de cette phase de pyrolyse, le processus d'injection/pyrolyse peut être répété afin de combler toute la porosité accessible de la préforme fibreuse. La résine précurseur de céramique ou de carbone peut ou non être chargée par des particules en céramique ou en carbone.

On peut combiner différentes techniques de formation de la matrice. Ainsi, il est possible de former une première phase de matrice en carbone par pyrolyse d'une résine précurseur puis une deuxième phase de matrice céramique, par exemple par frittage de particules céramiques.

Comme mentionné plus haut, l'étape de chauffage suivant l'injection (étape 400) est optionnelle dans le cadre de la présente invention. La composition d'imprégnation peut en effet, selon un quatrième exemple, être sous la forme d'une composition de métal fondu, par exemple de silicium fondu ou d'un alliage de silicium fondu. Dans ce cas, une poudre de particules céramiques ou carbone peut être introduite dans la porosité de la préforme fibreuse avant injection du métal fondu. Le métal fondu est ensuite injecté dans la porosité de la préforme fibreuse afin d'obtenir la matrice. La matrice peut, dans cet exemple, être obtenue directement après injection, et éventuel refroidissement, de la composition de métal fondu (sans étape de chauffage subséquente).

La pièce obtenue par mise en œuvre du procédé selon l'invention peut être une pièce de nacelle ou un cône d'éjection. La pièce peut par exemple avoir une structure comprenant une partie de cœur présente entre deux parties de peau.

L'expression « compris(e) entre ... et ... » doit se comprendre comme incluant les bornes.

## Revendications

1. Procédé de fabrication d'une pièce en matériau composite comprenant les étapes suivantes :
- formation d'une préforme fibreuse de la pièce à obtenir par dépôt sur une surface d'une pluralité de structures fibreuses imprégnées par un polymère thermoplastique, le dépôt étant effectué par placement automatique de fibres,
- élimination du polymère thermoplastique présent dans la préforme par dissolution par un solvant, et
- injection d'une composition d'imprégnation liquide dans la porosité de la préforme fibreuse après élimination du polymère thermoplastique afin de former une matrice dans la porosité de la préforme fibreuse.

2. Procédé selon la revendication 1, dans lequel le polymère thermoplastique a une température de transition vitreuse supérieure ou égale à 50°C.

3. Procédé selon la revendication 1 ou 2, dans lequel le polymère thermoplastique a une température de fusion supérieure ou égale à 50°C.

4. Procédé selon l'une quelconque des revendications 1 à 3, dans lequel le polymère thermoplastique est choisi parmi : les carbonates de polyalkylene, les polyesters, le poly(méthacrylate de méthyle), l'alcool polyvinylique, le polyvinylpyrrolidone, les polyethylènes glycol, les maltodextrines, les polymères cellulosiques, les cires et leurs mélanges.

5. Procédé selon l'une quelconque des revendications 1 à 4, dans lequel le polymère thermoplastique est hydrosoluble.

6. Procédé selon l'une quelconque des revendications 1 à 5, dans lequel le solvant est aqueux.

7. Procédé selon la revendication 6, dans lequel le solvant est de l'eau.

8. Procédé selon l'une quelconque des revendications 1 à 7, dans lequel le solvant est à une température supérieure ou égale à 60°C.

9. Procédé selon l'une quelconque des revendications 1 à 8, dans lequel la matrice est obtenue après chauffage de la composition d'imprégnation injectée dans la porosité de la préforme fibreuse.

10. Procédé selon la revendication 9, dans lequel la composition d'imprégnation comprend une suspension d'une pluralité de particules céramiques et dans lequel la matrice est formée par frittage de ces particules.

11. Procédé selon la revendication 9, dans lequel la composition d'imprégnation comprend une résine et dans lequel la matrice est formée par réticulation ou par réticulation puis pyrolyse de cette résine.

12. Procédé selon l'une quelconque des revendications 1 à 8, dans lequel la matrice est formée par injection d'une composition de métal fondu dans la porosité de la préforme.

13. Procédé selon l'une quelconque des revendications 1 à 12, dans lequel les structures fibreuses sont formées de fibres céramiques, oxyde ou non-oxyde, de fibres de verre, de fibres métalliques, de fibres polymériques, de fibres de bore ou de fibres carbone, ou d'un mélange de telles fibres.

## Patentansprüche

1. Verfahren zur Herstellung eines Teils aus Verbundwerkstoff, umfassend die folgenden Schritte:
- Bilden einer Faservorform des zu erhaltenden Teils durch Aufbringen einer Vielzahl mit einem thermoplastischen Polymer getränkter Faserstrukturen auf eine Oberfläche, wobei das Aufbringen durch automatisches Platzieren von Fasern durchgeführt wird,
- Entfernen des in der Vorform enthaltenen thermoplastischen Polymers durch Auflösen durch ein Lösungsmittel, und
- Einleiten einer flüssigen Imprägnierzusammensetzung in die Porosität der Faservorform nach dem Entfernen des thermoplastischen Polymers, um in der Porosität der Faservorform eine Matrix zu bilden.

2. Verfahren nach Anspruch 1, wobei das thermoplastische Polymer eine Glasübergangstemperatur von über oder gleich 50°C hat.

3. Verfahren nach Anspruch 1 oder 2, wobei das thermoplastische Polymer eine Schmelztemperatur von über oder gleich 50°C hat.

4. Verfahren nach einem der Ansprüche 1 bis 3, wobei das thermoplastische Polymer ausgewählt ist aus: den Polyalkylencarbonaten, den Polyestern, dem Polymethylmethacrylat, dem Polyvinylalkohol, dem Polyvinylpyrrolidon, den Polyethylenglycolen, den Maltodextrinen, den Cellulosepolymeren, den Wachsen und deren Gemischen.

5. Verfahren nach einem der Ansprüche 1 bis 4, wobei das thermoplastische Polymer wasserlöslich ist.

6. Verfahren nach einem der Ansprüche 1 bis 5, wobei das Lösungsmittel wässrig ist.

7. Verfahren nach Anspruch 6, wobei das Lösungsmittel Wasser ist.

8. Verfahren nach einem der Ansprüche 1 bis 7, wobei das Lösungsmittel auf einer Temperatur von über oder gleich 60°C ist.

9. Verfahren nach einem der Ansprüche 1 bis 8, wobei die Matrix nach Erwärmen der in die Porosität der Faservorform eingeleiteten Imprägnierzusammensetzung erhalten wird.

10. Verfahren nach Anspruch 9, wobei die Imprägnierzusammensetzung eine Suspension einer Vielzahl von keramischen Partikeln umfasst und wobei die Matrix durch Sintern dieser Partikel gebildet wird.

11. Verfahren nach Anspruch 9, wobei die Imprägnierzusammensetzung ein Harz umfasst und wobei die Matrix durch Vernetzung oder durch Vernetzung mit darauffolgender Pyrolyse dieses Harzes gebildet wird.

12. Verfahren nach einem der Ansprüche 1 bis 8, wobei die Matrix durch Einleiten einer geschmolzenen Metallzusammensetzung in die Porosität der Vorform gebildet wird.

13. Verfahren nach einem der Ansprüche 1 bis 12, wobei die Faserstrukturen von keramischen Oxid- oder Nicht-Oxid-Fasern, von Glasfasern, von Metallfasern, von Polymerfasern, von Borfasern oder von Carbonfasern oder einem Gemisch derartiger Fasern gebildet werden.

## Claims

1. A method of fabricating a composite part, the method comprising the following steps:
- forming a fiber preform for the part that is to be obtained by depositing a plurality of fiber structures impregnated with a thermoplastic polymer onto a surface, with deposition being performed by automated fiber placement;
- eliminating the thermoplastic polymer present in the preform by dissolution with a solvent; and
- injecting a liquid impregnation composition into the pores of the fiber preform after eliminating the thermoplastic polymer in order to form a matrix in the pores of the fiber preform.

2. A method according to claim 1, wherein the thermoplastic polymer has a glass transition temperature higher than or equal to 50°C.

3. A method according to claim 1 or claim 2, wherein the thermoplastic polymer has a melting temperature higher than or equal to 50°C.

4. A method according to any one of claims 1 to 3, wherein the thermoplastic polymer is selected from:
polyalkylene carbonates; polyesters; polymethyl methacrylate; polyvinyl alcohol; polyvinylpyrrolidone;
polyethylene glycols; maltodextrins; cellulose polymers; waxes; and mixtures thereof.

5. A method according to any one of claims 1 to 4, wherein the thermoplastic polymer is hydrosoluble.

6. A method according to any one of claims 1 to 5, wherein the solvent is aqueous.

7. A method according to claim 6, wherein the solvent is water.

8. A method according to any one of claims 1 to 7, wherein the solvent is at a temperature higher than or equal to 60°C.

9. A method according to any one of claims 1 to 8, wherein the matrix is obtained after heating the impregnation composition injected into the pores of the fiber preform.

10. A method according to claim 9, wherein the impregnation composition comprises a suspension of a plurality of ceramic particles and wherein the matrix is formed by sintering the particles.

11. A method according to claim 9, wherein the impregnation composition comprises a resin and wherein the matrix is formed by curing the resin or by curing and then pyrolyizing the resin.

12. A method according to any one of claims 1 to 8, wherein the matrix is formed by injecting a molten metal composition into the pores of the preform.

13. A method according to any one of claims 1 to 12, wherein the fiber structures are formed of oxide or non-oxide ceramic fibers, of glass fibers, of metal fibers, of polymer fibers, of boron fibers, or carbon fibers, or of a mixture of such fibers.
